# EUROPEAN PATENT APPLICATION

(11) **EP 4 847 846 A1**
(43) Date of publication of application: **02.12.2026**
(21) Application number: 25825038.0
(22) Date of filing: 09.06.2025
(51) Int. Cl.: F24F 5/00, H02J 9/08, H02J 9/06, G21D 1/00, G21D 1/02, F24F 11/46, F24F 11/64

(54) **HVAC SYSTEM FOR NUCLEAR POWER PLANTS AND HVAC ADJUSTMENT METHOD FOR NUCLEAR POWER PLANTS**

(30) Priority: 25.06.2024 CN 202410824262
(71) Applicant: China Nuclear Power Engineering Co., Ltd., Shenzhen, Guangdong 518116 (CN); China Nuclear Power Design Company Ltd. (Shenzhen), Shenzhen, Guangdong 518116 (CN)
(72) Inventor: JIAO, Zhenying, Shenzhen, Guangdong 518116 (CN); LI, Min, Shenzhen, Guangdong 518116 (CN); LIU, Zhiyun, Shenzhen, Guangdong 518116 (CN); ZHANG, Jianwen, Shenzhen, Guangdong 518116 (CN); MA, Tingwei, Shenzhen, Guangdong 518116 (CN); SUN, Chen, Shenzhen, Guangdong 518116 (CN); ZHANG, Tao, Shenzhen, Guangdong 518116 (CN); HU, Mingxin, Shenzhen, Guangdong 518116 (CN); PENG, Huaqing, Shenzhen, Guangdong 518116 (CN); GUO, Jingren, Shenzhen, Guangdong 518116 (CN); WU, Yuejun, Shenzhen, Guangdong 518116 (CN); HUANG, Yu, Shenzhen, Guangdong 518116 (CN); WAN, Guogang, Shenzhen, Guangdong 518116 (CN)
(74) Representative: Barker Brettell LLP
(86) International application number: PCT/CN2025/099919
(87) International publication number: WO 2026/001653

(57) **Abstract**

The present application relates to the technical field of HVAC for nuclear power plant units, and in particular to an HVAC system for nuclear power plants and an HVAC adjustment method for nuclear power plants. In the embodiments of the present application, cooling operations need to be executed on a plurality of buildings of a target nuclear power plant by means of building HVAC devices, so as to create a cooling effect experienced by the buildings; and by means of a plant site temperature measurement module, temperature measurement is performed on an environmental area where the target nuclear power plant is located, so as to obtain a plant site temperature. Furthermore, cold source supply subsystems and the building HVAC devices are controlled on the basis of the plant site temperature to adjust the cooling effect experienced by the buildings. It should be noted that, thanks to temperature measurement performed by a plant site temperature measurement module on an environmental area where a target nuclear power plant is located, a plant site temperature can be acquired, and therefore cold source supply subsystems and building HVAC devices are further controlled on the basis of the plant site temperature to adjust a cooling effect experienced by buildings. Thus, it is possible to adapt to temperature changes in an environment where a nuclear power plant is located during HVAC operations, thereby reducing energy waste.

## Description

### TECHNICAL FIELD

The present application relates to the technical field of HVAC of nuclear power plant units, and in particular to a nuclear power plant HVAC system and a nuclear power plant HVAC adjustment method.

### BACKGROUND

"HVAC" is an abbreviation of Heating, Ventilation, and Air Conditioning. It refers to a whole set of systems used for controlling and maintaining environmental conditions inside a building or a specific space. It may be understood that an HVAC system applied to a nuclear power plant is responsible for maintaining the temperature, humidity and air quality of various regions inside the nuclear power plant, and is a key link for ensuring stable operation of equipment of the nuclear power plant, maintaining the safety of the nuclear power plant and improving the overall operation efficiency.

In the related technologies, the HVAC system of a nuclear power plant needs to combine a manually configured operation mode with local automatic flow adjustment, so as to achieve temperature adjustment. After a loss of power, an operator needs to manually configure a plurality of subsystems of the nuclear power plant in the HVAC system to provide cooling for plant buildings, and the HVAC system internally adjusts the air volume according to the inlet air temperature, the capacity of the plant building and the like, so as to control the ambient temperature of the equipment of the plant building. Such a manner can hardly adapt to a temperature change of the environment where the nuclear power plant is located that occurs during an operation process, and easily causes energy waste.

### SUMMARY

The present application aims to solve at least one of the technical problems existing in the existing technologies. To this end, the present application provides a nuclear power plant HVAC system and a nuclear power plant HVAC adjustment method, which can adapt to a temperature change of the environment where the nuclear power plant is located that occurs during an HVAC operation process, and reduce energy waste.

The nuclear power plant HVAC system according to an embodiment of a first aspect of the present application is applied to a target nuclear power plant, the target nuclear power plant includes a plurality of plant buildings, and the nuclear power plant HVAC system includes:
a site temperature measurement module, configured to measure a site temperature of an environmental region where the target nuclear power plant is located;
plant building HVAC equipment, where each of the plant buildings is provided with the corresponding plant building HVAC equipment;
a cooling source supply subsystem, including a cooling source supply device, a liquid cooling unit and an air cooling unit, where the cooling source supply device is configured to deliver a cooling source to the plant building HVAC equipment, the liquid cooling unit is configured to provide a liquid refrigerant to the cooling source supply device, and the air cooling unit is configured to provide a gaseous refrigerant to the cooling source supply device.

According to some embodiments of the present application, the nuclear power plant HVAC system further includes:
an off-site power supply detection module, configured to detect an off-site power supply of the target nuclear power plant;
each of the liquid cooling units is provided with a corresponding emergency power generation module;
where the emergency power generation module is configured to: in a case where the off-site power supply detection module detects a power supply abnormality of the off-site power supply, if the site temperature is higher than a temperature threshold, start the emergency power generation module to provide a backup power supply to the liquid cooling unit.

According to some embodiments of the present application, the nuclear power plant HVAC system further includes:
each of the liquid cooling units is further provided with a corresponding station blackout power generation module, and the station blackout power generation module is coupled to the air cooling unit;
where the station blackout power generation module is configured to: in a case where the off-site power supply detection module detects a power supply abnormality of the off-site power supply and the emergency power generation module has a power supply abnormality, if the site temperature is higher than the temperature threshold, start the station blackout power generation module to provide a backup power supply to the air cooling unit.

According to some embodiments of the present application, the cooling source supply subsystem includes at least two trains of the liquid cooling units;
the air cooling unit is configured to: in a case where the off-site power supply detection module detects a power supply abnormality of the off-site power supply and the at least two trains of the liquid cooling units have a power supply abnormality of the emergency power generation module, if the site temperature is higher than the temperature threshold, start the air cooling unit to supply cooling to the plant buildings.

The nuclear power plant HVAC adjustment method according to an embodiment of a second aspect of the present application applies the nuclear power plant HVAC system according to the embodiment of the first aspect of the present application, and the method includes:
performing, by using the plant building HVAC equipment, a cooling operation on the plurality of plant buildings of the target nuclear power plant, so as to form a cooling influence to which the plant buildings are subjected;
performing, by using the site temperature measurement module, temperature measurement on the environmental region of the target nuclear power plant, so as to obtain the site temperature;
controlling, based on the site temperature, the cooling source supply subsystem and the plant building HVAC equipment, so as to adjust the cooling influence to which the plant buildings are subjected.

According to some embodiments of the present application, the controlling, based on the site temperature, the cooling source supply subsystem and the plant building HVAC equipment, so as to adjust a fresh air cooling influence to which the plant buildings are subjected includes:
in response to the site temperature being higher than a predetermined temperature threshold, controlling the cooling source supply subsystem to perform a cooling source supply operation on the plant building HVAC equipment, and controlling the plant building HVAC equipment to perform a fresh air cooling operation on the plant buildings, so as to adjust the fresh air cooling influence to which the plant buildings are subjected.

According to some embodiments of the present application, the nuclear power plant HVAC system further includes: an off-site power supply detection module, configured to detect an off-site power supply of the target nuclear power plant, and each of the liquid cooling units is provided with a corresponding emergency power generation module;
before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further includes:
in a case where the off-site power supply detection module detects a power supply abnormality of the off-site power supply, if the site temperature is higher than the temperature threshold, starting the emergency power generation module to provide a backup power supply to the liquid cooling unit.

According to some embodiments of the present application, the nuclear power plant HVAC system further includes: each of the liquid cooling units is further provided with a corresponding station blackout power generation module, and the station blackout power generation module is coupled to the air cooling unit;
before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further includes:
in a case where the off-site power supply detection module detects a power supply abnormality of the off-site power supply and the emergency power generation module has a power supply abnormality, if the site temperature is higher than the temperature threshold, starting the station blackout power generation module to provide a backup power supply to the air cooling unit.

According to some embodiments of the present application, the cooling source supply subsystem includes at least two trains of the liquid cooling units;
before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further includes:
in a case where the off-site power supply detection module detects a power supply abnormality of the off-site power supply and the at least two trains of the liquid cooling units have a power supply abnormality of the emergency power generation module, if the site temperature is higher than the temperature threshold, starting the air cooling unit to supply cooling to the plant buildings.

According to some embodiments of the present application, the controlling, based on the site temperature, the cooling source supply subsystem and the plant building HVAC equipment, so as to adjust a fresh air cooling influence to which the plant buildings are subjected includes:
in response to the site temperature being lower than a predetermined temperature threshold, controlling the cooling source supply subsystem to perform a cooling source shutdown operation on the plant building HVAC equipment, and controlling the plant building HVAC equipment to perform a fresh air cooling operation on the plant buildings, so as to adjust the fresh air cooling influence to which the plant buildings are subjected.

The nuclear power plant HVAC system and the nuclear power plant HVAC adjustment method according to the embodiments of the present application have at least the following beneficial effects:
In an embodiment of the present application, it is necessary to perform a cooling operation on the plurality of plant buildings of the target nuclear power plant by using the plant building HVAC equipment, so as to form the cooling influence to which the plant buildings are subjected, and to perform temperature measurement on the environmental region of the target nuclear power plant by using the site temperature measurement module, so as to obtain the site temperature. Further, based on the site temperature, the cooling source supply subsystem and the plant building HVAC equipment are controlled, so as to adjust the cooling influence to which the plant buildings are subjected. It should be noted that, thanks to the temperature measurement performed by the site temperature measurement module on the environmental region where the target nuclear power plant is located, the site temperature can be obtained, and therefore the cooling source supply subsystem and the plant building HVAC equipment are further controlled with the site temperature as a benchmark, so as to adjust the cooling influence to which the plant buildings are subjected. In this way, it is possible to adapt to a temperature change of the environment where the nuclear power plant is located that occurs during an HVAC operation process, and to reduce energy waste.

Additional aspects and advantages of the present application will be partly given in the following description, and will partly become apparent from the following description, or be learned through practice of the present application.

### BRIEF DESCRIPTION OF DRAWINGS

The above and/or additional aspects and advantages of the present application will become apparent and easily understood from the description of the embodiments in combination with the following accompanying drawings, in which:
FIG. 1 is a schematic diagram of a nuclear power plant HVAC system provided by an embodiment of the present application;
FIG. 2 is a schematic flowchart of a nuclear power plant HVAC adjustment method provided by an embodiment of the present application;
FIG. 3 is a schematic flowchart of a nuclear power plant HVAC adjustment method provided by an embodiment of the present application;
FIG. 4 is a schematic flowchart of a nuclear power plant HVAC adjustment method provided by an embodiment of the present application;
FIG. 5 is a schematic flowchart of a nuclear power plant HVAC adjustment method provided by an embodiment of the present application;
FIG. 6 is a schematic flowchart of a nuclear power plant HVAC adjustment method provided by an embodiment of the present application;
FIG. 7 is a specific schematic diagram of a nuclear power plant HVAC system provided by an embodiment of the present application;
FIG. 8 is a schematic diagram of a hardware structure of an electronic device provided by an embodiment of the present application.

### DETAILED DESCRIPTION

The embodiments of the present application are described in detail below, and examples of the embodiments are shown in the accompanying drawings, in which the same or similar reference numerals throughout denote the same or similar elements or elements having the same or similar functions. The embodiments described below with reference to the accompanying drawings are exemplary and are merely used for explaining the present application, and shall not be construed as limiting the present application.

In the description of the present application, the meaning of "several" is one or more, the meaning of "a plurality of" is two or more, "greater than", "less than", "exceeding" and the like are understood as not including the present number, and "above", "below", "within" and the like are understood as including the present number. If "first" and "second" are described, they are merely used for the purpose of distinguishing technical features, and shall not be construed as indicating or implying relative importance, or implicitly indicating the number of the indicated technical features, or implicitly indicating the sequential relationship of the indicated technical features.

In the description of the present application, it should be understood that, as regards orientation descriptions, for example, the orientations or positional relationships indicated by "upper", "lower", "left", "right", "front", "rear" and the like are the orientations or positional relationships shown based on the accompanying drawings, and are merely for facilitating the description of the present application and simplifying the description, rather than indicating or implying that the referred apparatus or element must have a specific orientation or be constructed and operated in a specific orientation, and therefore shall not be construed as limiting the present application.

In the description of this specification, the description with reference to the terms "an embodiment", "some embodiments", "an illustrative embodiment", "an example", "a specific example", "some examples" or the like means that a specific feature, structure, material or characteristic described in combination with the embodiment or example is included in at least one embodiment or example of the present application. In this specification, the illustrative expressions of the above terms do not necessarily refer to the same embodiment or example. Moreover, the described specific feature, structure, material or characteristic may be combined in a suitable manner in any one or more embodiments or examples.

In the description of the present application, it should be noted that, unless otherwise expressly defined, the words such as "arrange", "install" and "connect" shall be understood in a broad sense, and a person skilled in the art may reasonably determine the specific meanings of the above words in the present application in combination with the specific content of the technical solutions. In addition, the identification of specific steps hereinafter does not represent a limitation on the sequence of the steps and the execution logic, and the execution sequence and the execution logic among the steps shall be understood and inferred with reference to the content expressed in the embodiments.

"HVAC" is an abbreviation of Heating, Ventilation, and Air Conditioning. It refers to a whole set of systems used for controlling and maintaining environmental conditions inside a building or a specific space. Heating is used to provide heat so as to keep the interior warm, and is usually used in winter or in cold regions; ventilation is used to maintain indoor air quality by introducing fresh air and discharging polluted air, so as to ensure good air quality and a suitable humidity level; and air conditioning is used to adjust the indoor temperature and humidity, so as to provide a comfortable indoor environment.

The HVAC system applied to a nuclear power plant is responsible for maintaining the temperature, humidity and air quality of various regions inside the nuclear power plant, and is a key link for ensuring stable operation of equipment of the nuclear power plant, maintaining the safety of the nuclear power plant and improving the overall operation efficiency.

In the related technologies, the HVAC system of a nuclear power plant needs to combine a manually configured operation mode with local automatic flow adjustment, so as to achieve temperature adjustment. After a loss of power, an operator needs to manually configure a plurality of subsystems of the nuclear power plant in the HVAC system to provide cooling for plant buildings, and the HVAC system internally adjusts the air volume according to the inlet air temperature, the capacity of the plant building and the like, so as to control the ambient temperature of the equipment of the plant building. Such a manner can hardly adapt to a temperature change of the environment where the nuclear power plant is located that occurs during an operation process, and easily causes energy waste.

The present application aims to solve at least one of the technical problems existing in the existing technologies. To this end, the present application provides a nuclear power plant HVAC system and a nuclear power plant HVAC adjustment method, which can adapt to a temperature change of the environment where the nuclear power plant is located that occurs during an HVAC operation process, and reduce energy waste.

Further description is made below on the basis of the accompanying drawings.

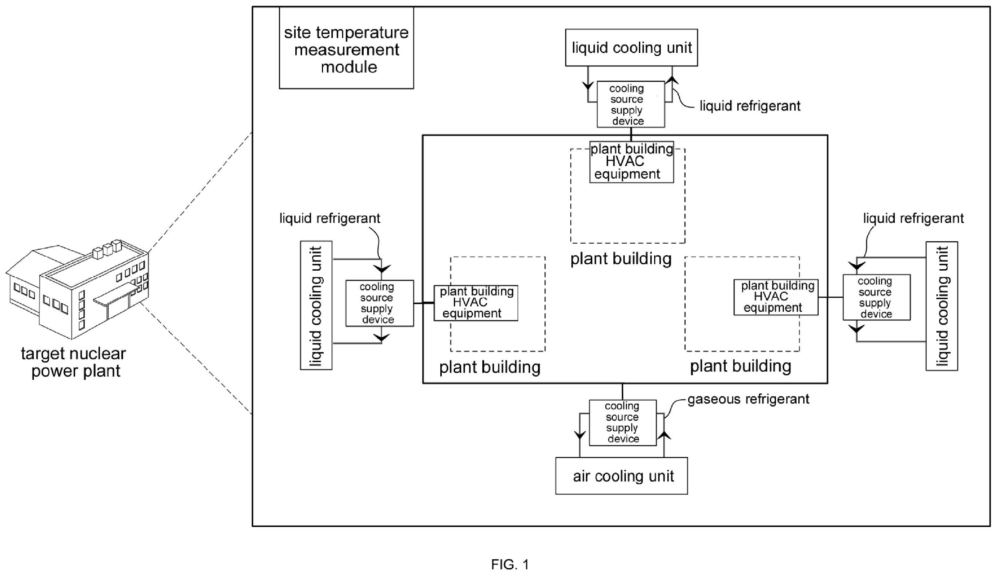

Referring to FIG. 1, the nuclear power plant HVAC system according to the embodiment of the first aspect of the present application is applied to a target nuclear power plant, the target nuclear power plant includes a plurality of plant buildings, and the nuclear power plant HVAC system includes:
a site temperature measurement module, configured to measure a site temperature of an environmental region where the target nuclear power plant is located. It should be noted that the site temperature measurement module is deployed in the surrounding environmental region where the target nuclear power plant is located. In order to make the site temperature measurement more accurate and more representative, the measurement point of the site temperature may be selected at a position that can reflect the temperature situation of the entire nuclear power plant region.

In some more specific embodiments, the measurement point of the site temperature needs to be able to represent the average temperature of the environmental region where the target nuclear power plant is located, so as to avoid a local temperature abnormality from affecting the overall site temperature measurement. The measurement points of the site temperature may also be distributed in different regions of the target nuclear power plant, so as to cover the entire plant area and obtain comprehensive temperature data. In key regions of the nuclear power plant, such as the vicinity of the reactor building and the surroundings of the cooling system, temperature monitoring points need to be arranged with emphasis, because the temperatures of these regions are of vital importance to the operation of the target nuclear power plant.

In order to ensure that temperature data can still be obtained when equipment fails, in the embodiment of the present application, at least two measurement points may further be arranged, so as to achieve redundancy and backup of the data, and, in a case where a single measurement point fails, an effective site temperature can still be measured.

Plant building HVAC equipment, where each plant building is provided with the corresponding plant building HVAC equipment. It should be noted that the plant building HVAC equipment is equipment that provides heating, ventilation and air conditioning functions for the plant buildings of the target nuclear power plant.

In some more specific embodiments, in the embodiment of the present application, the plant building HVAC equipment of the target nuclear power plant may constitute a plant building non-controlled area ventilation system (DVL). It should be pointed out that the DVL system is used to maintain a suitable temperature and ventilation in the non-controlled area rooms of the plant building, so as to provide suitable environmental conditions for the correct operation of equipment and for the entry of personnel. Specifically, the DVL system mainly provides HVAC functions, including cooling, fresh air and other functions, for safety-class equipment, I&C equipment, cable equipment and electrical panels of the nuclear power plant. It should be understood that the DVL system in the nuclear power plant is mainly responsible for providing a suitable temperature, humidity and air quality for the non-controlled areas inside the plant building.

It should be understood that the DVL system can ensure that the environmental conditions in the non-controlled areas meet the requirements for equipment operation and personnel safety. This includes maintaining suitable temperature and humidity levels, and providing sufficient ventilation to ensure air quality.

In some more specific embodiments, the DVL system may be composed of several independent subsystems. For example, when the DVL system includes three independent subsystems, these independent subsystems may be respectively referred to as train A, train B and train C. Physical isolation is performed between the subsystems, which can improve the safety and reliability of the DVL system. Each train of subsystems may include one operating train with 100% capacity and one maintenance train with 100% capacity. The operating train is responsible for the ventilation demand during normal operation, whereas the maintenance train serves as a backup and can take over the function of the operating train when the operating train needs maintenance or a fault occurs.

In some more specific embodiments, when an accident or an emergency occurs in the nuclear power plant, the DVL system can rapidly adjust the operation mode, so as to adapt to different emergency demands. For example, in a case of loss of the external power supply, the DVL may be switched to a mode of being powered by an EDG (emergency diesel generator set) or an SBO-DG (station blackout diesel generator set), so as to continue to provide necessary ventilation and cooling. The DVL system is a key component in the nuclear power plant, and, by providing suitable environmental conditions and cooling capability, ensures the safe operation of the nuclear power plant and the safety of personnel.

A cooling source supply subsystem, including a cooling source supply device, a liquid cooling unit and an air cooling unit, where the cooling source supply device is used to deliver a cooling source to the plant building HVAC equipment, the liquid cooling unit is used to provide a liquid refrigerant to the cooling source supply device, and the air cooling unit is used to provide a gaseous refrigerant to the cooling source supply device.

It should be noted that, in the cooling source supply subsystem, the liquid cooling unit is used to provide a liquid refrigerant to the cooling source supply device, and the air cooling unit is used to provide a gaseous refrigerant to the cooling source supply device. On this basis, the cooling source supply device forms a cooling source by means of the cooling capacity of the liquid refrigerant or the gaseous refrigerant, and delivers the cooling source to the plant building HVAC equipment.

In some more specific embodiments, a safety chilled liquid supply system (DEL) may be used as the cooling source supply device of the embodiment of the present application. The function of the safety chilled liquid supply system (DEL) is to provide cooling water for key regions and equipment of the nuclear power plant, so as to maintain these regions and equipment within a safe working temperature range. The DEL system can provide cooling water for a plurality of key systems and equipment of the nuclear power plant, so as to ensure that they can operate at a safe temperature. The DEL system may be composed of a plurality of subsystems for supplying cooling to the plant building HVAC equipment, and the cooling source supply subsystem includes a liquid cooling unit and an air cooling unit. The liquid cooling units may be composed of three independent trains A, B and C, which are redundant to one another, so as to improve the reliability of the system. The liquid cooling units in the DEL system may be cooled by the RRI (component cooling water system), so as to supply cooling to different plant buildings. The air cooling unit may serve as a backup of the liquid cooling units, and may provide cooling when the RRI or a DEL liquid cooling unit fails.

In some more specific embodiments, in a case of a loss of power or another emergency, the DEL system can be switched to an emergency power supply, such as an EDG (emergency diesel generator set) or an SBO-DG (station blackout diesel generator set), according to the specific situation, so as to ensure the continuous supply of the cooling capability.

In some more specific embodiments, the DEL system closely cooperates with the DVL system. When the cooling source of the DVL is lost, the DVL may operate solely in the fresh air mode, so as to maintain the freshness and the oxygen level of the indoor air, whereas the DEL system provides additional cooling support when necessary. In the embodiment of the present application, when the plant building HVAC equipment constitutes the DVL system, the air cooling unit may introduce a gaseous refrigerant into the DVL system, so as to cooperate with the DVL system in supplying cooling to the corresponding plant building.

It should be understood that the DEL system is a key component in the nuclear power plant, and, by providing an effective cooling water source, ensures the safe operation of the nuclear power plant and the normal working of key equipment. Through intelligent and automated control, the DEL system can adapt to different operation conditions and environmental changes, and improve the operation efficiency and safety of the nuclear power plant.

It should be emphasized that the plant building HVAC equipment and the cooling source supply device are two key components in the nuclear power plant HVAC system in the embodiment of the present application, and they respectively undertake different functions.

The plant building HVAC equipment is mainly responsible for providing suitable temperature and ventilation conditions for certain regions of the target nuclear power plant. It ensures that the air quality and the environmental conditions of these regions can meet the requirements for the normal operation of equipment and the safe entry of personnel. In the embodiment of the present application, the target nuclear power plant may specifically be provided with several trains of plant building HVAC equipment, and physical isolation may be performed between the trains of plant building HVAC equipment, so as to improve the safety and reliability of the system. Each train of plant building HVAC equipment further includes one operating train and one maintenance train, the operating train being responsible for the ventilation demand during normal operation, and the maintenance train being used for equipment maintenance and troubleshooting. In a case where the cooling source is lost, the plant building HVAC equipment may operate solely in the fresh air mode, and utilize the outside fresh air to maintain the cooling demand of the plant building.

The cooling source supply device is responsible for providing a liquid refrigerant and a gaseous refrigerant for the target nuclear power plant, where the liquid refrigerant may be used to cool key equipment and systems, such as the above-mentioned plant building HVAC equipment. The cooling source supply device may be divided into two sub-trains: a liquid cooling unit train and an air cooling unit train. The liquid cooling unit train may be cooled by the component cooling water system (RRI) and provide a liquid refrigerant for different plant buildings; and the air cooling unit train may supply cooling to any train of the plant building HVAC equipment, so as to ensure that, even if part of the plant building HVAC equipment fails, the cooling capability for the plant buildings will not be lost.

In addition, the air cooling unit may also serve as a backup of the liquid cooling units. When the RRI or a liquid cooling unit fails, the air cooling unit can provide cooling, thereby reducing the dependence on the RRI cooling water or the cooling source supply device.

Therefore, the plant building HVAC equipment and the cooling source supply device work together, so as to ensure that the target nuclear power plant can maintain suitable environmental conditions both under normal operation conditions and under accident conditions, thereby guaranteeing the normal operation of the equipment and the safety of personnel. In addition, the plant building HVAC equipment and the cooling source supply device can respond more efficiently to different operation conditions and environmental changes, and improve the operation reliability and safety of the target nuclear power plant.

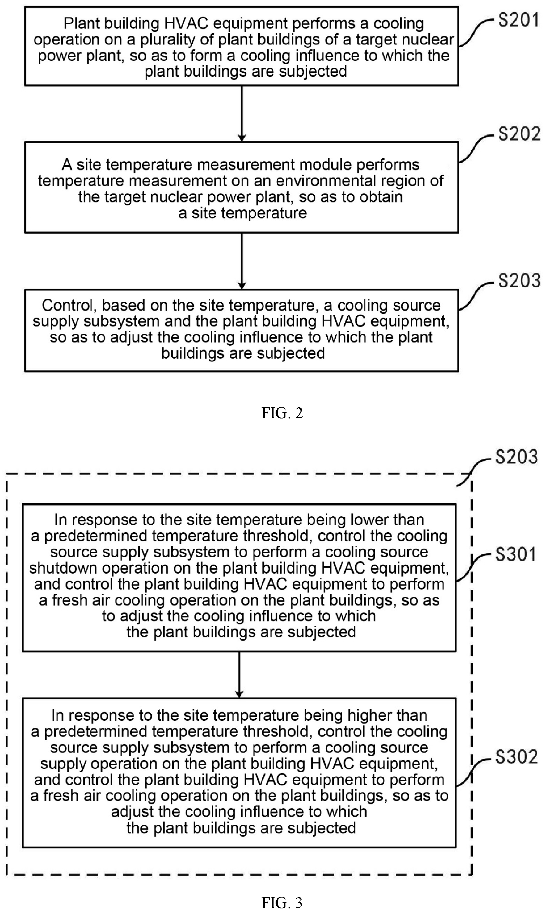

Referring to FIG. 2, the nuclear power plant HVAC adjustment method according to the embodiment of the second aspect of the present application applies the nuclear power plant HVAC system according to the embodiment of the first aspect of the present application, and the nuclear power plant HVAC adjustment method may include:
In step S201, a cooling operation is performed on the plurality of plant buildings of the target nuclear power plant by using the plant building HVAC equipment, so as to form a cooling influence to which the plant buildings are subjected.
In step S202, temperature measurement is performed on the environmental region of the target nuclear power plant by using the site temperature measurement module, so as to obtain the site temperature.
In step S203, based on the site temperature, the cooling source supply subsystem and the plant building HVAC equipment are controlled, so as to adjust the cooling influence to which the plant buildings are subjected.

In the embodiment of the present application, it is necessary to perform a cooling operation on the plurality of plant buildings of the target nuclear power plant by using the plant building HVAC equipment, so as to form the cooling influence to which the plant buildings are subjected, and to perform temperature measurement on the environmental region of the target nuclear power plant by using the site temperature measurement module, so as to obtain the site temperature. Further, based on the site temperature, the cooling source supply subsystem and the plant building HVAC equipment are controlled, so as to adjust the cooling influence to which the plant buildings are subjected. It should be noted that, thanks to the temperature measurement performed by the site temperature measurement module on the environmental region where the target nuclear power plant is located, the site temperature can be obtained, and therefore the cooling source supply subsystem and the plant building HVAC equipment are further controlled with the site temperature as a benchmark, so as to adjust the cooling influence to which the plant buildings are subjected. In this way, it is possible to adapt to a temperature change of the environment where the nuclear power plant is located that occurs during an HVAC operation process, and to reduce energy waste.

Referring to FIG. 3, according to some embodiments of the present application, step S203 of controlling, based on the site temperature, the cooling source supply subsystem and the plant building HVAC equipment, so as to adjust the cooling influence to which the plant buildings are subjected may include:
In step S301, in response to the site temperature being lower than a predetermined temperature threshold, the cooling source supply subsystem is controlled to perform a cooling source shutdown operation on the plant building HVAC equipment, and the plant building HVAC equipment is controlled to perform a fresh air cooling operation on the plant buildings, so as to adjust the cooling influence to which the plant buildings are subjected.
In step S302, in response to the site temperature being higher than the predetermined temperature threshold, the cooling source supply subsystem is controlled to perform a cooling source supply operation on the plant building HVAC equipment, and the plant building HVAC equipment is controlled to perform a fresh air cooling operation on the plant buildings, so as to adjust the cooling influence to which the plant buildings are subjected.

In step S301 of some embodiments, in response to the site temperature being lower than the predetermined temperature threshold, the cooling source supply subsystem is controlled to perform a cooling source shutdown operation on the plant building HVAC equipment, and the plant building HVAC equipment is controlled to perform a fresh air cooling operation on the plant buildings, so as to adjust the cooling influence to which the plant buildings are subjected. It should be noted that, if the site temperature is lower than the temperature threshold, the low outside temperature has already provided sufficient cooling capability for the plant buildings, and therefore no additional mechanical refrigeration is needed. By introducing outside fresh cold air, the plant building HVAC equipment can not only effectively reduce the internal temperature, but also ensure air quality and satisfy the ventilation demand, and this is the fresh air cooling operation, that is, the fresh air mode. It should be understood that the fresh air mode reduces the dependence on the cooling source supply subsystem, thereby reducing energy consumption and operation costs. When operating in the fresh air mode, the plant building HVAC equipment can be independent of the cooling equipment of the cooling source supply subsystem, so that, even in a case where part of the functions of the cooling source supply subsystem are impaired or under maintenance, the plant building HVAC equipment can still maintain the stability of the internal environment of the plant buildings. Such a design increases the redundancy and reliability of the entire HVAC system, and ensures that the safe operation of the nuclear power plant can be maintained under various environmental conditions.

In addition, the site temperature is monitored in real time by using the site temperature measurement module and is compared with a preset threshold. Once the temperature data indicates that the outside air is sufficient to provide the required cooling effect, the plant building HVAC equipment can be adjusted to switch to the fresh air mode. Such automated switching reduces the need for manual operation, and improves the response speed and the operation efficiency of the system.

In a case where the off-site power supply detection module detects a power supply abnormality of the off-site power supply, if the site temperature is higher than the temperature threshold, it means that the fresh air mode of the plant building HVAC equipment is insufficient to achieve the required cooling effect, and at this time it is necessary to start the emergency power generation module to provide a backup power supply to the liquid cooling unit, so as to prevent a case of failure of the off-site power supply from bringing losses to the target nuclear power plant.

In step S302 of some embodiments, in response to the site temperature being higher than the predetermined temperature threshold, the cooling source supply subsystem is controlled to perform a cooling source supply operation on the plant building HVAC equipment, and the plant building HVAC equipment is controlled to perform a fresh air cooling operation on the plant buildings, so as to adjust the cooling influence to which the plant buildings are subjected. It should be noted that, in a case where the site temperature is higher than the temperature threshold, it means that the fresh air mode of the plant building HVAC equipment is insufficient to achieve the required cooling effect, and at this time it is necessary, while controlling the plant building HVAC equipment to perform the fresh air cooling operation on the plant buildings, to additionally control the cooling source supply subsystem to perform the cooling source supply operation on the plant building HVAC equipment, so as to create a better cooling effect for the plant buildings by means of the plant building HVAC equipment.

According to some embodiments of the present application, the nuclear power plant HVAC system may further include:
an off-site power supply detection module, configured to detect an off-site power supply of the target nuclear power plant.

It should be noted that the off-site power supply refers to the electric power supply that the target nuclear power plant receives from an external power grid or an external power source point. Such a power supply provides the necessary electric power for a plant or a facility, so as to support its normal operation, including production, lighting, equipment operation, safety systems and the like. In addition to relying on its own power generation capability (such as the electric power generated by the turbine generator set of the nuclear power plant), a nuclear power plant may also need to obtain electric power from an external power grid, and therefore the off-site power supply is particularly important for the target nuclear power plant.

In some embodiments, in the design and operation of the target nuclear power plant, the reliability and safety of the off-site power supply are usually taken into consideration, including emergency response measures in the case of failure of the off-site power supply. For example, if the off-site power supply fails, the target nuclear power plant needs to rely on its own emergency diesel generator sets or other emergency power generation modules to maintain key operations and safety functions.

On this basis, each liquid cooling unit is provided with a corresponding emergency power generation module; where the emergency power generation module is configured to: in a case where the off-site power supply detection module detects a power supply abnormality of the off-site power supply, if the site temperature is higher than the temperature threshold, start the emergency power generation module to provide a backup power supply to the liquid cooling unit.

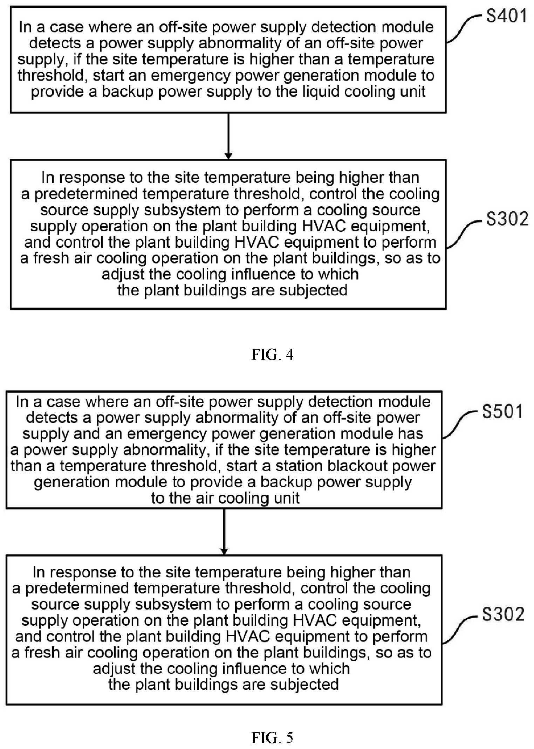

Referring to FIG. 4, according to some embodiments of the present application, the nuclear power plant HVAC system may further include: an off-site power supply detection module, configured to detect an off-site power supply of the target nuclear power plant, and each liquid cooling unit is provided with a corresponding emergency power generation module.

Before step S302 of controlling the cooling source supply subsystem to perform the cooling source supply operation on the plant building HVAC equipment, and controlling the plant building HVAC equipment to perform the fresh air cooling operation on the plant buildings, so as to adjust the cooling influence to which the plant buildings are subjected, the method may further include:
In step S401, in a case where the off-site power supply detection module detects a power supply abnormality of the off-site power supply, if the site temperature is higher than the temperature threshold, the emergency power generation module is started to provide a backup power supply to the liquid cooling unit.

It should be noted that, in a case where the off-site power supply detection module detects a power supply abnormality of the off-site power supply, it means that a power supply abnormality has occurred in the off-site power supply of the target nuclear power plant, and at this time it is necessary to take emergency response measures so as to cope with the power supply abnormality of the off-site power supply. If the site temperature is higher than the temperature threshold, it means that the plant building HVAC equipment is sufficient for cooling by means of the fresh air mode.

It should be emphasized that, if the site temperature is lower than the temperature threshold, the low outside temperature has already provided sufficient cooling capability for the plant buildings, and therefore no additional mechanical refrigeration is needed. By introducing outside fresh cold air, the plant building HVAC equipment can not only effectively reduce the internal temperature, but also ensure air quality and satisfy the ventilation demand, and this is the fresh air cooling operation. It should be understood that the fresh air mode reduces the dependence on the cooling source supply subsystem, thereby reducing energy consumption and operation costs. When operating in the fresh air mode, the plant building HVAC equipment can be independent of the cooling equipment of the cooling source supply subsystem, so that, even in a case where part of the functions of the cooling source supply subsystem are impaired or under maintenance, the plant building HVAC equipment can still maintain the stability of the internal environment of the plant buildings. Such a design increases the redundancy and reliability of the entire HVAC system, and ensures that the safe operation of the nuclear power plant can be maintained under various environmental conditions.

In addition, the site temperature is monitored in real time by using the site temperature measurement module and is compared with a preset threshold. Once the temperature data indicates that the outside air is sufficient to provide the required cooling effect, the plant building HVAC equipment can be adjusted to switch to the fresh air mode. Such automated switching reduces the need for manual operation, and improves the response speed and the operation efficiency of the system.

In a case where the off-site power supply detection module detects a power supply abnormality of the off-site power supply, if the site temperature is higher than the temperature threshold, it means that the fresh air mode of the plant building HVAC equipment is insufficient to achieve the required cooling effect, and at this time it is necessary to start the emergency power generation module to provide a backup power supply to the liquid cooling unit, so as to prevent a case of failure of the off-site power supply from bringing losses to the target nuclear power plant.

According to some embodiments of the present application, the nuclear power plant HVAC system may further include:
each liquid cooling unit is further provided with a corresponding station blackout power generation module, and the station blackout power generation module is coupled to the air cooling unit. It should be noted that the station blackout power generation module is an emergency power source used by the target nuclear power plant under more extreme circumstances. For example, in a case where the off-site power supply detection module detects a power supply abnormality of the off-site power supply, all of the emergency power generation modules fail, which causes the target nuclear power plant to enter station blackout (Station Black Out, SBO) condition. On this basis, the station blackout power generation module may be started to provide a backup power supply to the air cooling unit.

On this basis, the station blackout power generation module is configured to: in a case where the off-site power supply detection module detects a power supply abnormality of the off-site power supply and the emergency power generation module has a power supply abnormality, if the site temperature is higher than the temperature threshold, start the station blackout power generation module to provide a backup power supply to the air cooling unit.

The main function of the station blackout power generation module is to provide the necessary electric power for the air cooling unit when all other power supplies fail, so as to support the safety systems and key operations until part or all of the power supply can be restored.

Referring to FIG. 5, according to some embodiments of the present application, the nuclear power plant HVAC system may further include: each liquid cooling unit is further provided with a corresponding station blackout power generation module, and the station blackout power generation module is coupled to the air cooling unit.

Before step S302 of controlling the cooling source supply subsystem to perform the cooling source supply operation on the plant building HVAC equipment, and controlling the plant building HVAC equipment to perform the fresh air cooling operation on the plant buildings, so as to adjust the cooling influence to which the plant buildings are subjected, the method may further include:
In step S501, in a case where the off-site power supply detection module detects a power supply abnormality of the off-site power supply and the emergency power generation module has a power supply abnormality, if the site temperature is higher than the temperature threshold, the station blackout power generation module is started to provide a backup power supply to the air cooling unit.

In the target nuclear power plant, the reason for arranging the station blackout power generation module to supply power to the air cooling unit rather than to the liquid cooling unit lies in that: the air cooling system, serving as a backup of the liquid cooling system, is simpler in design and faster in start-up and response, which is very critical in an emergency situation. The air cooling system directly utilizes outdoor air for cooling, which reduces the dependence on the water circulation system, and, in a case where the off-site power supply detection module detects a power supply abnormality of the off-site power supply, the air cooling system can rapidly take over the cooling task, so as to ensure that the cooling demand of the key regions is satisfied. Furthermore, the station blackout power generation module can serve as the highest-level backup power source in the target nuclear power plant, and its design purpose is to ensure that, under extreme circumstances, the key safety systems of the target nuclear power plant can at least obtain a minimum electric power supply. Therefore, arranging the station blackout power generation module to supply power to the air cooling unit can provide an additional level of safety guarantee, so as to ensure that, even in a case where the off-site power supply has a power supply abnormality and the emergency power generation module has a power supply abnormality, the air cooling system can still continue to operate. In summary, arranging the station blackout power generation module to supply power to the air cooling unit rather than to the liquid cooling unit can improve the response capability, reliability and safety of the nuclear power plant in an emergency situation.

It should be emphasized that, if the site temperature is lower than the temperature threshold, the low outside temperature has already provided sufficient cooling capability for the plant buildings, and therefore no additional mechanical refrigeration is needed. By introducing outside fresh cold air by means of the fresh air mode, the plant building HVAC equipment can not only effectively reduce the internal temperature, but also ensure air quality and satisfy the ventilation demand.

In a case where the off-site power supply detection module detects a power supply abnormality of the off-site power supply and the emergency power generation module has a power supply abnormality, if the site temperature is higher than the temperature threshold, it means that the fresh air mode of the plant building HVAC equipment is insufficient to achieve the required cooling effect, and at this time it is necessary to start the station blackout power generation module to provide a backup power supply to the air cooling unit, so as to prevent a case of failure of the off-site power supply and a power supply abnormality of the emergency power generation module from bringing losses to the target nuclear power plant.

In some more specific embodiments, the power supply situation of the nuclear power plant HVAC system is described as follows:
Liquid cooling unit: powered by the emergency power generation module; in a case where the off-site power supply detection module detects a power supply abnormality of the off-site power supply, the liquid cooling train of the cooling source supply subsystem is lost;
Air cooling unit: powered by the station blackout power generation module; in a case where the off-site power supply detection module detects a power supply abnormality of the off-site power supply, the air cooling train of the cooling source supply subsystem is still available;
Maintenance train of the plant building HVAC equipment: powered by the plant service power (the main and auxiliary off-site power supplies); in a case where the off-site power supply detection module detects a power supply abnormality of the off-site power supply, the maintenance train of the plant building non-controlled area ventilation system (DVL) is lost;
Operating train of the plant building HVAC equipment: powered by the emergency power generation module or the station blackout power generation module;
Fresh air portion of the plant building HVAC equipment: powered by the emergency power generation module or the station blackout power generation module.

According to some embodiments of the present application, the cooling source supply subsystem may include at least two trains of liquid cooling units;
the air cooling unit is configured to: in a case where the off-site power supply detection module detects a power supply abnormality of the off-site power supply and the at least two trains of liquid cooling units have a power supply abnormality of the emergency power generation module, if the site temperature is higher than the temperature threshold, start the air cooling unit to supply cooling to the plant buildings.

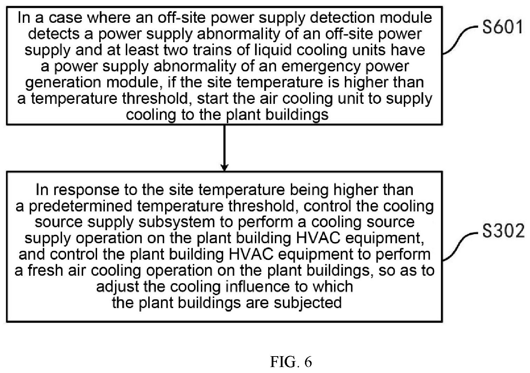

Referring to FIG. 6, according to some embodiments of the present application, the cooling source supply subsystem may include at least two trains of liquid cooling units.

Before step S302 of controlling the cooling source supply subsystem to perform the cooling source supply operation on the plant building HVAC equipment, and controlling the plant building HVAC equipment to perform the fresh air cooling operation on the plant buildings, so as to adjust the cooling influence to which the plant buildings are subjected, the method may further include:
In step S601, in a case where the off-site power supply detection module detects a power supply abnormality of the off-site power supply and the at least two trains of liquid cooling units have a power supply abnormality of the emergency power generation module, if the site temperature is higher than the temperature threshold, the air cooling unit is started to supply cooling to the plant buildings.

It should be noted that the cooling source supply subsystem may include at least two trains of liquid cooling units, where each train of liquid cooling units may provide a liquid refrigerant for the plant building HVAC equipment installed in each plant building. It should be pointed out that the at least two trains of liquid cooling units may provide liquid refrigerant for each piece of plant building HVAC equipment by means of liquid refrigerant delivery pipelines, and if a fault occurs in the liquid cooling units of some of the trains, each piece of plant building HVAC equipment can still normally obtain the liquid refrigerant under such an arrangement.

It should be emphasized that each liquid cooling unit is provided with a corresponding emergency power generation module, and the air cooling unit is used to cooperate with the plant building HVAC equipment in supplying cooling to the corresponding plant building. In a case where the off-site power supply detection module detects a power supply abnormality of the off-site power supply and the at least two trains of liquid cooling units have a power supply abnormality of the emergency power generation module, if the site temperature is higher than the temperature threshold, it may mean that the supply of the liquid refrigerant to the plant building HVAC equipment is insufficient, and at this time it is necessary to start the air cooling unit to supply cooling to the corresponding plant building, so as to prevent a case of failure of the off-site power supply and a power supply abnormality of the emergency power generation module from bringing losses to the target nuclear power plant.

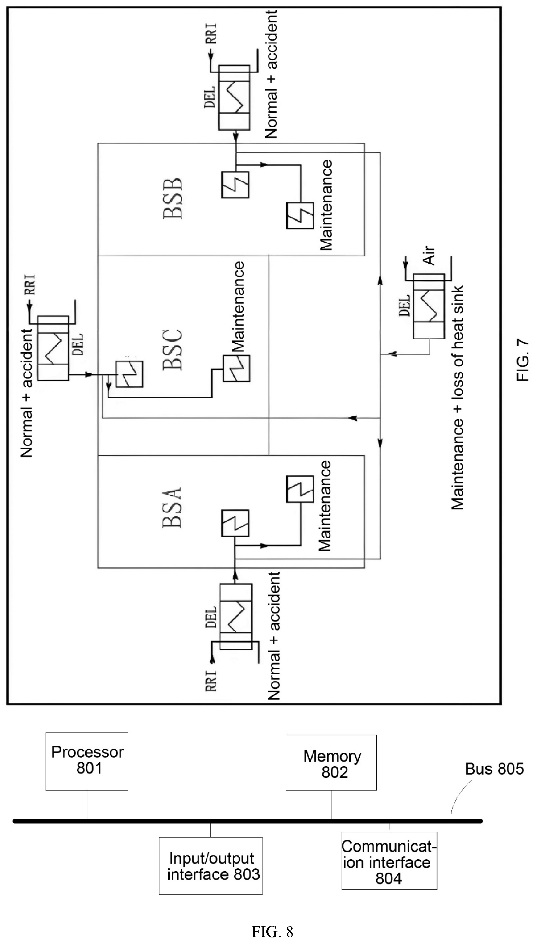

Referring to FIG. 7, according to some more specific embodiments provided by the present application, in the embodiment of the present application, the plant building HVAC equipment of the target nuclear power plant may constitute a plant building non-controlled area ventilation system (DVL), and a safety chilled liquid supply system (DEL) is used as the cooling source supply device of the embodiment of the present application.

During normal operation conditions and accident conditions of the target nuclear power plant, the non-controlled area ventilation system (DVL) of each plant building maintains a suitable temperature and ventilation in the non-controlled area rooms of the safety plant building, so as to provide suitable environmental conditions for the correct operation of equipment and for the entry of personnel.

The safety chilled liquid supply system (DEL) is divided into two sub-trains: a liquid cooling unit train and an air cooling unit train. The liquid cooling unit train is one train of liquid cooling units, and the air cooling unit train is one train of air cooling units.

The liquid cooling unit train is used to provide a liquid refrigerant for the plant building non-controlled area ventilation system (DVL), and there are three independent trains A, B and C in total, where train A, train B and train C are redundantly arranged. The liquid cooling units may be cooled by the cooling liquid of the component cooling liquid system (RRI), so as to respectively supply cooling to the BSA, BSB and BSC plant buildings.

The air cooling unit train serves as a backup of the liquid cooling units, and the air cooling units are cooled by outdoor air, so as to reduce the influence produced when the RRI cooling liquid or the safety chilled liquid supply system (DEL) is unavailable. When the RRI or a liquid cooling unit of the safety chilled liquid supply system (DEL) fails, the air cooling unit can provide cooling for the safety chilled liquid supply system (DEL). The faults of the liquid cooling units may include a loss of the ultimate heat sink (LUHS) and a station blackout (SBO) condition. In addition, the air cooling unit train may also directly supply cooling to the plant buildings of train A, train B or train C. Generally, due to a capacity limitation, cooling cannot be supplied to three trains simultaneously, whereas cooling can be supplied to two trains simultaneously. For accident handling, two trains are sufficient.

The plant building non-controlled area ventilation system (DVL) is composed of 3 trains, which are respectively located in the corresponding safety plant buildings for physical isolation, and each train is composed of one 100% operating train and one 100% maintenance train.

Train A/B/C of the safety chilled liquid supply system (DEL) is respectively provided with one liquid cooling unit for supplying cooling to A/B/C of the plant building non-controlled area ventilation system (DVL); in addition, the safety chilled liquid supply system (DEL) is further provided with one air cooling unit, which can supply cooling to any one of A/B/C of the plant building non-controlled area ventilation system (DVL), and this ensures that the loss of one of the cooling chains will not lead to a loss of the cooling capability of the entire system.

The fresh air operation mode of the plant building non-controlled area ventilation system (DVL):
During normal operation, the plant building non-controlled area ventilation system (DVL) continuously operates in the fresh air mode, and cooperates with the cooling source of the safety chilled liquid supply system (DEL), so as to guarantee ventilation and air exchange as well as cooling of the plant buildings. When the cooling source of the plant building non-controlled area ventilation system (DVL) is lost, the plant building non-controlled area ventilation system (DVL) operates solely in the fresh air mode. When the site temperature of the nuclear power plant is low, the plant building non-controlled area ventilation system (DVL) operates in the fresh air mode, which can guarantee the cooling of the plant buildings.

Referring to FIG. 8, FIG. 8 illustrates the hardware structure of an electronic device of another embodiment, and the electronic device may include:
a processor 801, which may be implemented in a form such as a general-purpose CPU (Central Processing Unit), a microprocessor, an application specific integrated circuit (Application Specific Integrated Circuit, ASIC), or one or more integrated circuits, and is used for executing a related program, so as to implement the technical solution provided by the embodiment of the present application;
a memory 802, which may be implemented in a form such as a read only memory (Read Only Memory, ROM), a static storage device, a dynamic storage device or a random access memory (Random Access Memory, RAM). The memory 802 may store an operating system and other application programs, and when the technical solution provided by the embodiment of this specification is implemented by means of software or firmware, the related program code is stored in the memory 802 and is invoked by the processor 801 to execute the nuclear power plant HVAC adjustment method of the embodiment of the present application;
an input/output interface 803, used for implementing information input and output;
a communication interface 804, used for implementing communication interaction between the present device and another device, where the communication may be implemented in a wired manner (for example, a USB, a network cable and the like), and may also be implemented in a wireless manner (for example, a mobile network, WIFI, Bluetooth and the like);
a bus 805, which transmits information between the various components of the device (for example, the processor 801, the memory 802, the input/output interface 803 and the communication interface 804);
where the processor 801, the memory 802, the input/output interface 803 and the communication interface 804 implement communication connection with one another inside the device by means of the bus 805.

The embodiment of the present application further provides a computer program product, and the computer program product may include a computer program. A processor of a computer device reads and executes the computer program, so that the computer device performs the above-mentioned nuclear power plant HVAC adjustment method.

The terms "first", "second", "third", "fourth" and the like (if any) in the specification of the present application and in the above-mentioned accompanying drawings are used for distinguishing similar objects, and are not necessarily used for describing a specific order or sequence. It should be understood that the data used in this way may be interchanged where appropriate, so that the embodiments of the present application described herein can, for example, be implemented in an order other than those illustrated or described herein. In addition, the terms "may include" and "contain" and any variations thereof are intended to cover a non-exclusive inclusion; for example, a process, method, system, product or apparatus that contains a series of steps or units is not necessarily limited to those steps or units expressly listed, but may include other steps or units that are not expressly listed or that are inherent to such process, method, product or apparatus.

It should be understood that, in the present application, "at least one (item)" means one or more, and "a plurality of" means two or more. "And/or" is used for describing an association relationship of associated objects, and indicates that three relationships may exist; for example, "A and/or B" may indicate three cases, namely that only A exists, that only B exists, and that A and B exist simultaneously, where A and B may be singular or plural. The character "/" generally indicates that the associated objects before and after it are in an "or" relationship. "At least one of the following (items)" or a similar expression thereof refers to any combination of these items, and may include any combination of a single item (piece) or a plurality of items (pieces). For example, at least one (piece) of a, b or c may indicate: a, b, c, "a and b", "a and c", "b and c", or "a and b and c", where a, b and c may be single or plural.

It should be understood that, in the description of the embodiments of the present application, the meaning of "a plurality of" (or "a plurality of items") is two or more, "greater than", "less than", "exceeding" and the like are understood as not being able to include the present number, and "above", "below", "within" and the like are understood as being able to include the present number.

In the several embodiments provided in the present application, it should be understood that the disclosed system, apparatus and method may be implemented in other manners. For example, the apparatus embodiments described above are merely illustrative; for example, the division of the units is merely a division of logical functions, and there may be other division manners in actual implementation, for example, a plurality of units or components may be combined or may be integrated into another system, or some features may be ignored or not executed. In another aspect, the mutual coupling or direct coupling or communication connection that is shown or discussed may be indirect coupling or communication connection through some interfaces, apparatuses or units, and may be electrical, mechanical or in other forms.

The units described as separate components may or may not be physically separate, and the components displayed as units may or may not be physical units, that is, they may be located in one place, or may also be distributed over a plurality of network units. Some or all of the units may be selected according to actual needs to achieve the objective of the solution of this embodiment.

In addition, the functional units in the embodiments of the present application may be integrated into one processing unit, or the units may exist physically separately, or two or more units may be integrated into one unit. The above-mentioned integrated unit may be implemented in the form of hardware, and may also be implemented in the form of a software functional unit.

If the integrated unit is implemented in the form of a software functional unit and is sold or used as an independent product, it may be stored in a computer-readable storage medium. Based on such an understanding, the technical solution of the present application in essence, or the part contributing to the existing technologies, or all or part of the technical solution may be embodied in the form of a software product. The computer software product is stored in a storage medium, and may include several instructions for causing a computer device (which may be a personal computer, a server, a network device or the like) to execute all or part of the steps of the methods of the embodiments of the present application. The aforementioned storage medium may include: a USB flash disk, a removable hard disk, a read-only memory (Read-Only Memory, ROM for short), a random access memory (Random Access Memory, RAM for short), a magnetic disk, an optical disc and various other media that can store program code.

It should also be understood that the various implementations provided in the embodiments of the present application may be arbitrarily combined, so as to achieve different technical effects.

The above is a specific description of the embodiments of the present application, but the present application is not limited to the above-mentioned embodiments. A person skilled in the art may further make various equivalent modifications or substitutions without departing from the spirit of the present application, and these equivalent modifications or substitutions may all be included within the scope defined by the claims of the present application.

## Claims

1. A nuclear power plant heating, ventilation and air conditioning (HVAC) system, applied to a target nuclear power plant, the target nuclear power plant comprising a plurality of plant buildings, the nuclear power plant HVAC system comprising:
a site temperature measurement module, configured to measure a site temperature of an environmental region where the target nuclear power plant is located;
plant building HVAC equipment, wherein each of the plant buildings is provided with corresponding plant building HVAC equipment; and
a cooling source supply subsystem, comprising a cooling source supply device, a liquid cooling unit and an air cooling unit, wherein the cooling source supply device is configured to deliver a cooling source to the plant building HVAC equipment, the liquid cooling unit is configured to provide a liquid refrigerant to the cooling source supply device, and the air cooling unit is configured to provide a gaseous refrigerant to the cooling source supply device.

2. The nuclear power plant HVAC system according to claim 1, wherein the nuclear power plant HVAC system further comprises:
an off-site power supply detection module, configured to detect an off-site power supply of the target nuclear power plant;
wherein each of the liquid cooling units is provided with a corresponding emergency power generation module;
wherein the emergency power generation module is configured to: in response to the off-site power supply detection module detecting a power supply abnormality of the off-site power supply, and in response to the site temperature being higher than a predetermined temperature threshold, start the emergency power generation module to provide a backup power supply to the liquid cooling unit.

3. The nuclear power plant HVAC system according to claim 2, wherein the nuclear power plant HVAC system further comprises:
each of the liquid cooling units being further provided with a corresponding station blackout power generation module, the station blackout power generation module being coupled to the air cooling unit;
wherein the station blackout power generation module is configured to: in response to the off-site power supply detection module detecting a power supply abnormality of the off-site power supply and the emergency power generation module having a power supply abnormality, and in response to the site temperature being higher than the temperature threshold, start the station blackout power generation module to provide a backup power supply to the air cooling unit.

4. The nuclear power plant HVAC system according to claim 2, wherein the cooling source supply subsystem comprises at least two trains of the liquid cooling units;
the air cooling unit is configured to: in response to the off-site power supply detection module detecting a power supply abnormality of the off-site power supply and the at least two trains of the liquid cooling units having a power supply abnormality of the emergency power generation module, and in response to the site temperature being higher than the temperature threshold, start the air cooling unit to supply cooling to the plant buildings.

5. A nuclear power plant HVAC adjustment method, applied to the nuclear power plant HVAC system according to claim 1, the method comprising:
performing, by the plant building HVAC equipment, a cooling operation on the plurality of plant buildings of the target nuclear power plant, so as to form a cooling influence to which the plant buildings are subjected;
performing, by the site temperature measurement module, temperature measurement on the environmental region of the target nuclear power plant, so as to obtain the site temperature;
controlling, based on the site temperature, the cooling source supply subsystem and the plant building HVAC equipment, so as to adjust the cooling influence to which the plant buildings are subjected.

6. The method according to claim 5, wherein the controlling, based on the site temperature, the cooling source supply subsystem and the plant building HVAC equipment, so as to adjust a fresh air cooling influence to which the plant buildings are subjected comprises:
in response to the site temperature being higher than a predetermined temperature threshold, controlling the cooling source supply subsystem to perform a cooling source supply operation on the plant building HVAC equipment, and controlling the plant building HVAC equipment to perform a fresh air cooling operation on the plant buildings, so as to adjust the fresh air cooling influence to which the plant buildings are subjected.

7. The method according to claim 6, wherein the nuclear power plant HVAC system further comprises: an off-site power supply detection module, configured to detect an off-site power supply of the target nuclear power plant, each of the liquid cooling units being provided with a corresponding emergency power generation module;
wherein before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further comprises:
in response to the off-site power supply detection module detecting a power supply abnormality of the off-site power supply, and in response to the site temperature being higher than the temperature threshold, starting the emergency power generation module to provide a backup power supply to the liquid cooling unit.

8. The method according to claim 7, wherein the nuclear power plant HVAC system further comprises: each of the liquid cooling units being further provided with a corresponding station blackout power generation module, the station blackout power generation module being coupled to the air cooling unit;
wherein before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further comprises:
in response to the off-site power supply detection module detecting a power supply abnormality of the off-site power supply and the emergency power generation module having a power supply abnormality, and in response to the site temperature being higher than the temperature threshold, starting the station blackout power generation module to provide a backup power supply to the air cooling unit.

9. The method according to claim 7, wherein the cooling source supply subsystem comprises at least two trains of the liquid cooling units;
wherein before the controlling the cooling source supply subsystem to perform the cooling source supply operation on the plant building HVAC equipment, and controlling the plant building HVAC equipment to perform the fresh air cooling operation on the plant buildings, so as to adjust the fresh air cooling influence to which the plant buildings are subjected, the method further comprises:
in response to the off-site power supply detection module detecting a power supply abnormality of the off-site power supply and the at least two trains of the liquid cooling units having a power supply abnormality of the emergency power generation module, and in response to the site temperature being higher than the temperature threshold, starting the air cooling unit to supply cooling to the plant buildings.

10. The method according to claim 5, wherein the controlling, based on the site temperature, the cooling source supply subsystem and the plant building HVAC equipment, so as to adjust a fresh air cooling influence to which the plant buildings are subjected comprises:
in response to the site temperature being lower than a predetermined temperature threshold, controlling the cooling source supply subsystem to perform a cooling source shutdown operation on the plant building HVAC equipment, and controlling the plant building HVAC equipment to perform a fresh air cooling operation on the plant buildings, so as to adjust the fresh air cooling influence to which the plant buildings are subjected.
